# EUROPEAN PATENT APPLICATION

(11) **EP 4 738 968 A1**
(43) Date of publication of application: **06.05.2026**
(21) Application number: 24832501.1
(22) Date of filing: 28.06.2024
(51) Int. Cl.: H04W 74/04, H04W 52/02, H04W 74/0816, H04W 84/12, H04W 72/0446

(54) **METHOD AND DEVICE FOR PERFORMING R-TWT RELATED NOTIFICATION IN MULTI-BSS ENVIRONMENT IN WIRELESS LAN SYSTEM**

(30) Priority: 30.06.2023 KR 20230085115; 05.07.2023 KR 20230087342; 07.07.2023 KR 20230088523
(71) Applicant: LG Electronics Inc., Yeongdeungpo-gu Seoul 07336 (KR)
(72) Inventor: BAEK, Sunhee, Seoul 06772 (KR); CHOI, Jinsoo, Seoul 06772 (KR); JANG, Insun, Seoul 06772 (KR); KIM, Geonhwan, Seoul 06772 (KR); YOON, Yelin, Seoul 06772 (KR); CHA, Dongju, Seoul 06772 (KR)
(74) Representative: Plasseraud IP
(86) International application number: PCT/KR2024/009100
(87) International publication number: WO 2025/005725

(57) **Abstract**

Disclosed are a method and a device for performing an R-TWT related notification in a multi-BSS environment in a wireless LAN system. A method performed by a station (STA) in a wireless LAN system according to an embodiment of the present disclosure may comprise the steps of: receiving a frame including a notification related to a restricted TWT (R-TWT) service period (SP) from a first access point (AP) associated with the STA; and performing a related operation for the R-TWT SP. Here, on the basis that a first R-TWT SP scheduled by the first AP and a second R-TWT SP scheduled by a second AP not associated with the STA do not overlap in the time domain, the notification may include both information related to the first R-TWT SP and information related to the second R-TWT SP.

## Description

### [TECHNICAL FIELD]

The present disclosure relates to a method and apparatus for performing notification related to restricted-target wake time (R-TWT) in a multi-BSS (basic service set) environment in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and device for performing notification related to restricted-target wake time (R-TWT) in a multi-BSS (basic service set) environment in a wireless local area network (WLAN) system.

The technical objects to be achieved by the present disclosure are not limited to the above-described technical objects, and other technical objects which are not described herein will be clearly understood by those skilled in the pertinent art from the following description.

### [Technical Solution]

A method performed by a station (STA) in a wireless LAN system according to an aspect of the present disclosure may comprise: receiving, by the STA associated with a first access point (AP) of a first basic service set (BSS), a frame transmitted from a second AP of a second BSS; based on the frame including information for a restricted target wake time (R-TWT) service period (SP) scheduled by the second AP, transmitting, to the first AP, information for one or more time intervals being non-overlapped with the R-TWT SP; and receiving, from the first AP, scheduling information for the STA based on the information for the one or more time intervals.

A method performed by a first access point (AP) in a wireless LAN system according to an additional aspect of the present disclosure may comprise: receiving, from an STA associated with the first AP of a first basic service set (BSS), information for one or more time intervals that do not overlap with a restricted target wake time (R-TWT) service period (SP) scheduled by a second AP of a second BSS; and allocating and announcing scheduling information for the STA based on the information for the one or more time intervals.

A method performed by a station (STA) in a wireless LAN system according to an additional aspect of the present disclosure may comprise: receiving, from a first access point (AP) with which the STA is associated, a frame including an announcement related to a restricted target wake time (R-TWT) service period (SP); and performing a related operation for the R-TWT SP. Herein, based on a first R-TWT SP scheduled by the first AP and a second R-TWT SP scheduled by a second AP with which the STA is not associated not overlapping in a time domain, the announcement may include both information related to the first R-TWT SP and information related to the second R-TWT SP.

A method performed by a first access point (AP) in a wireless LAN system according to an additional aspect of the present disclosure may comprise: obtaining information for a restricted target wake time (R-TWT) service period (SP) scheduled by a second AP belonging to a second basic service set (BSS) different from a first BSS to which the first AP belongs; determining whether the R-TWT SP scheduled by the second AP overlaps with an R-TWT SP scheduled by the first AP; and based on the R-TWT SP scheduled by the first AP and the R-TWT SP scheduled by the second AP not overlapping in a time domain, transmitting a frame for announcing both information related to the R-TWT SP scheduled by the first AP and information related to the R-TWT SP scheduled by the second AP.

### [Technical Effects]

According to the present disclosure, a method and device for performing notification related to restricted-target wake time (R-TWT) in a multi-BSS (basic service set) environment in a wireless local area network (WLAN) system can be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing various transmission or reception techniques in a MAP environment to which the present disclosure may be applied.
FIG. 9 is a diagram for describing an example of an individual TWT operation to which the present disclosure may be applied.
FIG. 10 is a diagram for describing an example of a broadcast TWT operation to which the present disclosure may be applied.
FIG. 11 is a diagram illustrating APs and STAs in an OBSS to which the present disclosure may be applied.
FIG. 12 illustrates an example of STA operation according to the present disclosure.
FIG. 13 illustrates another example of first AP operation according to the present disclosure.
FIG. 14 illustrates an example of STA operation for an overlapping coordinated R-TWT SP according to the present disclosure.
FIG. 15 illustrates an example of the configuration of coordinated R-TWT information according to the present disclosure.
FIG. 16 illustrates an example of STA operation for a non-overlapping coordinated R-TWT SP according to the present disclosure.
FIG. 17 illustrates another example of STA operation for a non-overlapping coordinated R-TWT SP according to the present disclosure.
FIG. 18 illustrates the operation of an AP that performs an announcement for a coordinated R-TWT SP and/or a coordinated OBSS R-TWT SP according to the present disclosure.
FIG. 19 illustrates the operation of an STA for an announced R-TWT SP according to the present disclosure.
FIG. 20 illustrates another example of an STA operation according to the present disclosure.
FIG. 21 illustrates another example of a first AP operation according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

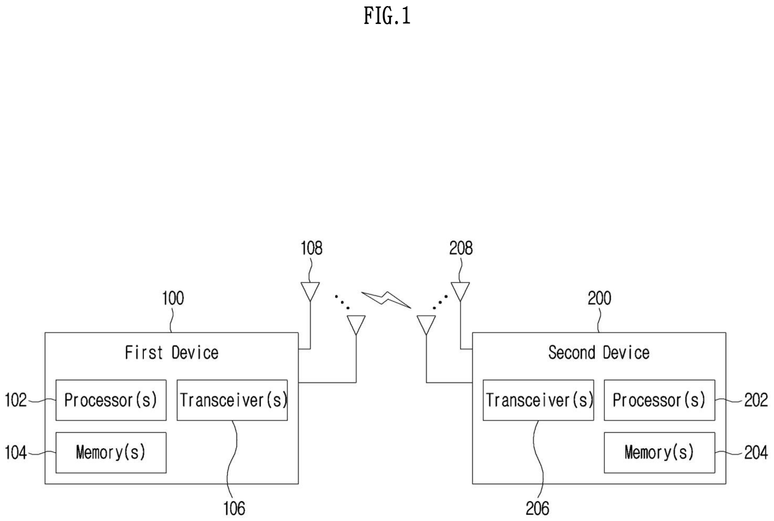

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

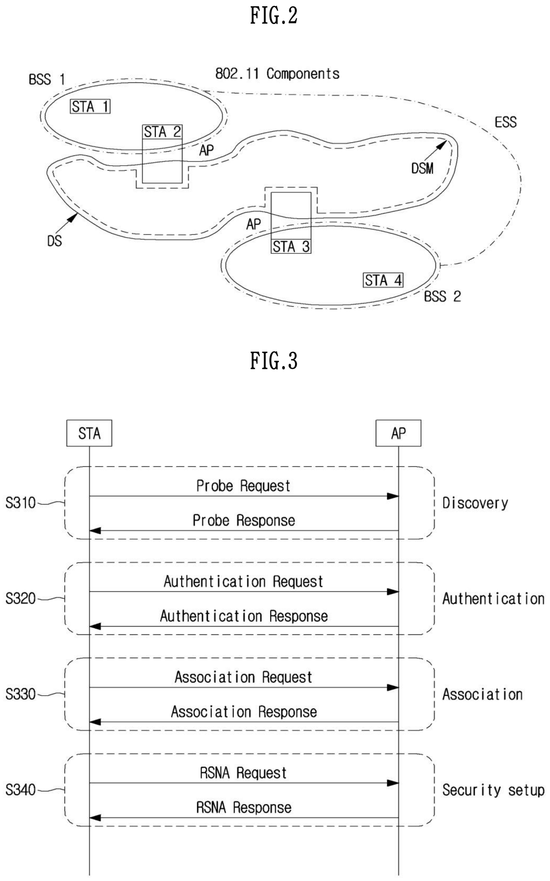

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

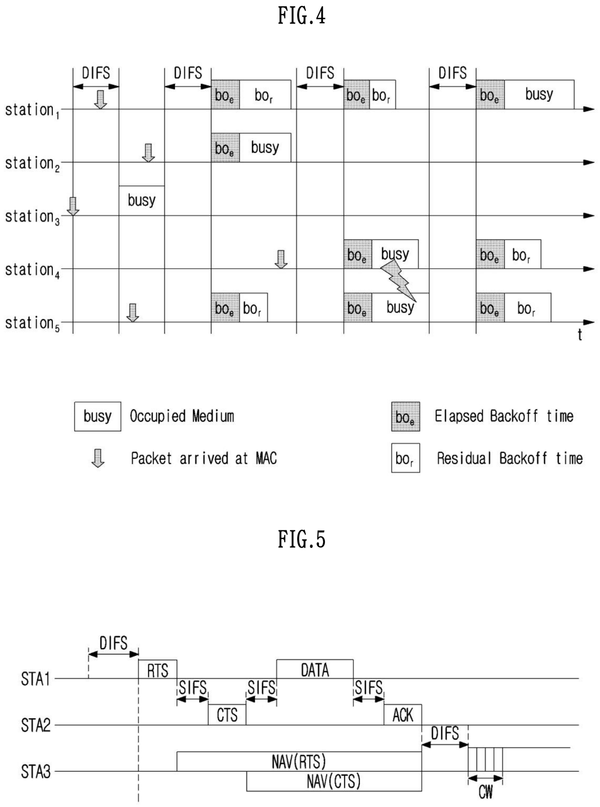

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

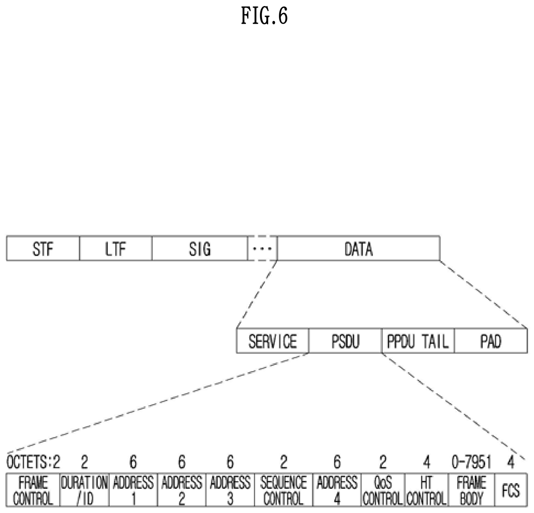

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

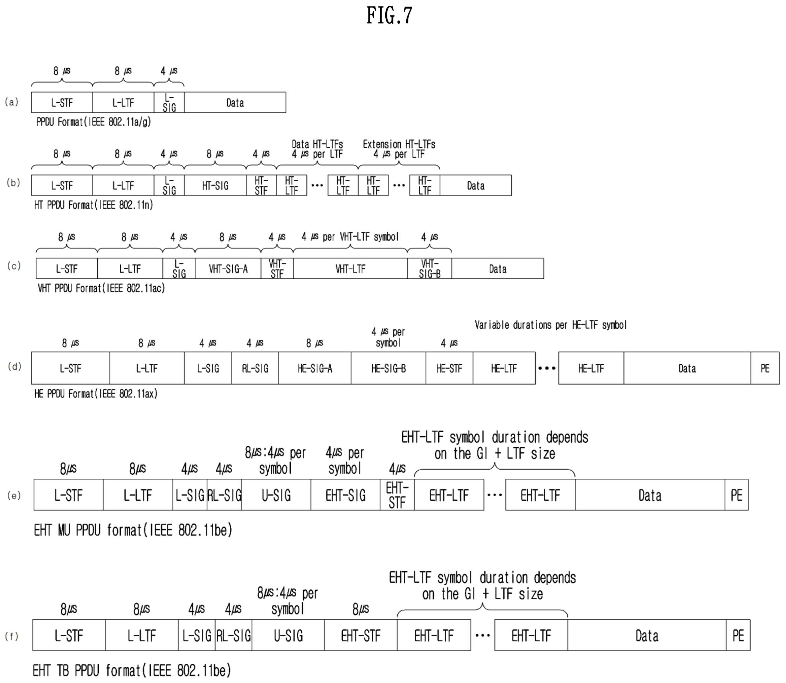

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11 a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple Access Point (MAP) Operation

Hereinafter, examples of the present disclosure for a multi-access point (MAP) operation will be described.

A MAP operation may be defined as an operation between a master AP (or a sharing AP) and a slave AP (or a shared AP).

A master AP plays a role of initiating and controlling a MAP operation for transmission or reception between multiple APs. A master AP groups a slave AP and manages a link with slave APs to share information between slave APs. A master AP manages information of a BSS configured with slave APs and information of STAs associated with a corresponding BSS.

A slave AP may be associated with a master AP and share control information, management information and data traffic with each other. A slave AP performs a basic function of an AP which may establish a BSS in a wireless LAN in the same way.

A STA in a MAP operation may be associated with a slave AP or a master AP to configure a BSS.

In a MAP environment, a master AP and a slave AP may perform direct transmission or reception with each other. A master AP and a STA may not be able to perform direct transmission or reception with each other. A slave AP (e.g., a slave AP associated with a STA) may perform direct transmission or reception with a STA. One of slave APs may become a master AP.

A MAP operation is a technique in which at least one AP transmits and receives information to at least one STA. For example, a C-TDMA (coordinated-time division multiple access) technique which divides allocation between APs on a time axis, a C-OFDMA (coordinated-orthogonal frequency division multiple access) technique which divides allocation between APs on a frequency axis, a C-SR (coordinated-spatial reuse) technique which uses spatial reuse and others may be applied for a MAP operation. Alternatively, a coordinated beamforming (C-BF) or joint beamforming technique which performs simultaneous transmission or reception in cooperation may be also applied for a MAP operation.

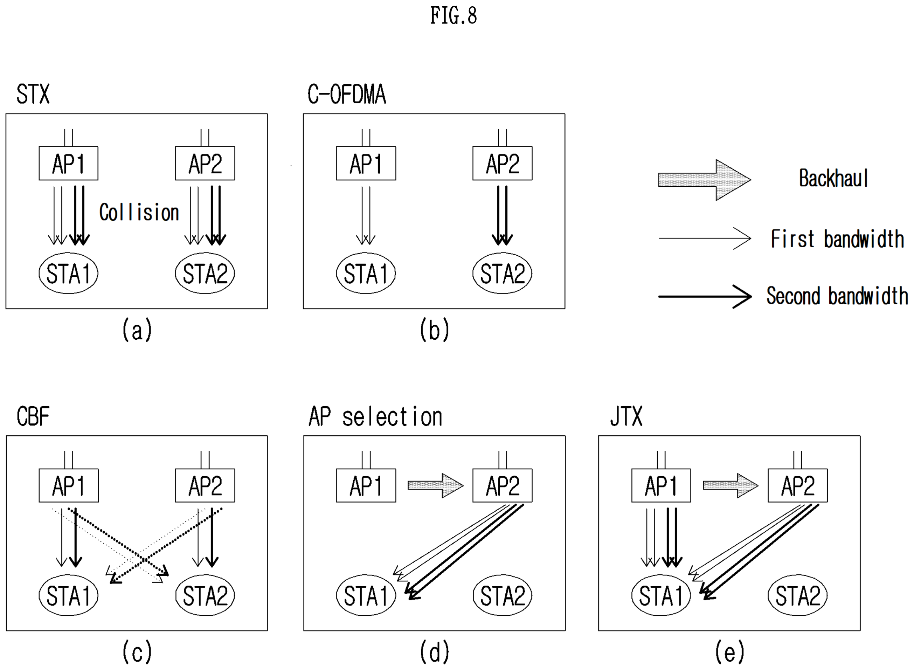

FIG. 8 is a diagram for describing various transmission or reception techniques in a MAP environment to which the present disclosure may be applied.

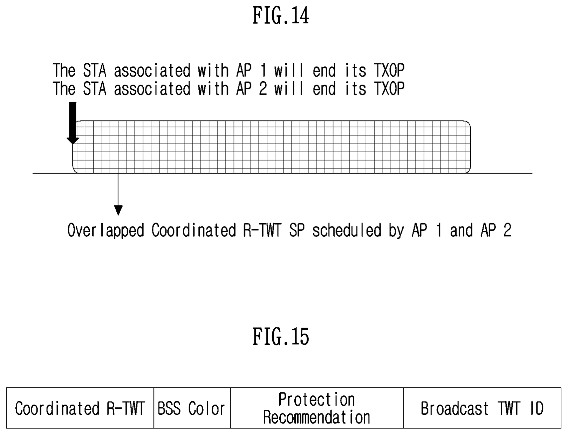

When a BSS AP performs transmission to a BSS STA like an existing method, it may be referred to as single transmission (STX). In STX, there is a problem that the performance of transmission or reception for users/STAs positioned at a cell edge is reduced due to interference with an adjacent AP. For example, as in FIG. 15(a), when AP1 and AP2 perform transmission to STA1 and STA2 at the same time in the same frequency bandwidth, a collision may occur on a wireless medium.

In a MAP technique, performance may be improved through a method for reducing inter-symbol interference (ISI) through cooperation between neighboring APs or performing transmission together. For example, in a C-OFDMA method of FIG. 8(b), AP1 may perform transmission to STA1 in a first bandwidth and AP2 may perform transmission to STA2 in a second bandwidth at the same time, avoiding interference. An example in FIG. 8(c) shows cooperative beamforming or nulling technique in which AP1 nulls interference to AP2 and/or STA2 while performing transmission to STA1 and AP2 nulls interference to AP1 and/or STA1 while performing transmission to STA2. FIG. 8(d) shows an AP selection method in which an AP with a good channel condition among the adjacent APs performs transmission. As in an example of FIG. 8(e), joint transmission (JTX) or joint reception (JRX) in which multiple APs cooperate to perform transmission or reception simultaneously may be applied, and further, joint MU-MIMO may be supported.

In the examples of the present disclosure, it is assumed that a multi-AP operation is performed as follows.
Step 1: Distribute a resource region to each AP through a trigger frame from a master AP (i.e., an AP-to-AP trigger frame, or a master trigger frame)
Step 2: Each AP performs DL (i.e., from an AP to a STA) data transmission in a resource region distributed to it, or transmits a trigger frame (i.e., an AP-to-STA trigger frame) for UL (i.e., from a STA to an AP) data transmission in a resource region distributed to it.
Step 3: A STA transmits a response to DL data, or transmits through UL data (e.g., a TB PPDU).

When a resource distributed between APs is a frequency resource, it may correspond to a C-OFDMA method, when it is a time resource, it may correspond to a C-TDMA technique and when it is a spatial resource (or beam), it may correspond to a CBF method. In examples described below, it is described representatively by assuming that a C-OFDMA technique, i.e., a multi-AP operation through a resource distinguished in a frequency domain, is performed. However, a scope of the present disclosure is not limited thereto, and may additionally or alternatively include a multi-AP operation through a resource distinguished in another domain (e.g., a time domain and/or a space domain).

### Target Wake Time (TWT)

Hereinafter, a target wake time (TWT) is described.

A TWT is a power saving (PS) technology which may improve energy efficiency of non-AP STAs by defining a service period (SP) between an AP and non-AP STA and sharing information about a SP each other to reduce media contention. A STA which performs a request/a suggest/a demand, etc. in a TWT setup step may be referred to as a TWT requesting STA. In addition, an AP which responds to a corresponding request such as Accept/Reject, etc. may be referred to as a TWT responding STA. A setup step may include a TWT request for an AP of a STA, a type of a TWT operation performed and a process of determining/defining a frame type transmitted or received. A TWT operation may be divided into an individual TWT and a broadcast TWT.

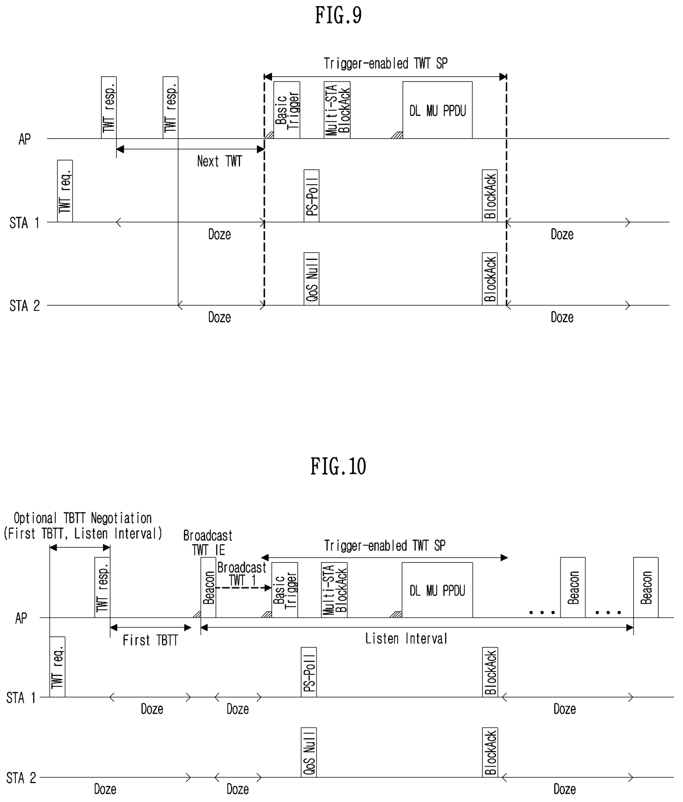

FIG. 9 is a diagram for describing an example of an individual TWT operation to which the present disclosure may be applied.

An individual TWT is a mechanism that an AP and non-AP STA perform data exchange after performing negotiation for an awake/doze status of a non-AP STA through transmission or reception of a TWT request/response frame. In an example of FIG. 9, an AP and STA1 may form a trigger-enabled TWT agreement through a TWT request frame and a TWT response frame. Here, a method used by STA1 is a solicited TWT method, which is a method that when STA1 transmits a TWT request frame to an AP, STA1 receives information for a TWT operation from an AP through a TWT response frame. On the other hand, STA2 which performs an unsolicited TWT method may receive information on a trigger-enabled TWT agreement configuration from an AP through an unsolicited TWT response. Specifically, STA2 may calculate a next TWT by adding a specific number from a current TWT value. During a trigger-enabled TWT SP, an AP may transmit a trigger frame to STAs. The trigger frame may inform STAs that an AP has buffered data. In response to it, STA1 may inform an AP of its awake status by transmitting a PS-Poll frame. In addition, STA2 may inform an AP of its awake status by transmitting a QoS Null frame. Here, a data frame transmitted by STA1 and STA2 may be a frame in a TB PPDU form. An AP which confirmed a status of STA1 and STA2 may transmit a DL MU PPDU to awake STAs. When a corresponding TWT SP expires, STA1 and STA2 may switch to a doze status.

FIG. 10 is a diagram for describing an example of a broadcast TWT operation to which the present disclosure may be applied.

A broadcast TWT is a TWT that a non-AP STA (or a TWT scheduling STA) acquires information on a target beacon transmission time (TBTT) and a listen interval, etc. by transmitting or receiving a TWT request/response frame with an AP (or a TWT scheduled STA). Here, a negotiation operation for a TBTT may be performed. Based on it, an AP may define a frame which will include scheduling information of a TWT through a beacon frame. In FIG. 10, STA1 performs a solicited TWT operation and STA2 performs an unsolicited TWT operation. An AP may transmit a DL MU PPDU after confirming an awake status of STAs through a trigger transmitted by an AP. It may be the same as a process of an individual TWT. In a broadcast TWT, a trigger-enabled TWT SP including a beacon frame may be repeated several times at a certain interval.

Delivery of TWT information may be performed through a TWT information frame and a TWT information element.

As wired and wireless traffic has recently exploded, latency sensitive traffic has also increased significantly. Latency sensitive traffic includes real-time audio/video transmission, and with the proliferation of multimedia devices, the need to support this in a wireless environment has increased. However, compared to a wired environment, there are many things to consider in a wireless environment to support latency sensitive traffic. It is because transmission speed in a wireless environment is lower than that in a wired environment, and an interference problem from the surroundings must also be considered. In particular, in a WLAN system, multiple STAs must compete equally for medium occupancy in an Industry-Science-Medical (ISM) band, so compared to a cellular communication network based on radio resource scheduling by a central base station, it is relatively more difficult to support latency sensitive traffic. The present disclosure describes a new method for supporting latency sensitive traffic in a WLAN system.

In the present disclosure, latency may refer to latency defined in the IEEE 802.11 series standard. For example, it may refer to time until after a frame to be transmitted to a queue of a MAC layer of a transmitting STA is entered, transmission of a transmitting STA is successfully completed in a PHY layer, and a corresponding frame is deleted from a queue of a MAC layer of a transmitting STA after a transmitting STA receives ACK/block ACK, etc. from a receiving STA. In addition, in the present disclosure, a non-AP STA that supports transmission of latency sensitive data may be called a low latency STA. And, data other than latency sensitive data may be called regular data.

As an AP configures a special broadcast TWT for a low latency STA that transmits latency sensitive data, a restricted TWT (restricted-TWT, r-TWT) may support securing a data transmission possibility for a low latency STA in preference to other STAs. A STA may establish a membership for at least one r-TWT schedule for an AP. Here, a r-TWT agreement may be established by the same process as a broadcast TWT agreement, and a broadcast TWT element for this may be defined to include a r-TWT parameter set field. For example, a r-TWT parameter set may refer to a specific broadcast TWT parameter set field that is distinct from other broadcast TWT parameter set fields. In other words, a r-TWT parameter set field may correspond to a special case of a broadcast TWT parameter set field. In addition, an AP may announce a r-TWT SP.

Basically, if another STA that supports a r-TWT operation is a TXOP holder, the TXOP must be ended before the start time of a r-TWT SP advertised in an associated AP. Accordingly, a STA related to a corresponding r-TWT (i.e., a low latency STA) may perform traffic transmission or reception in preference to the other STAs within a r-TWT SP.

In the present disclosure, as described above, a low latency STA related to a specific r-TWT is referred to as a member r-TWT scheduled STA, and other STAs are referred to as a non-member STA. A non-member STA has a capability to support a r-TWT operation, but it may be not a member of any r-TWT, or may support a r-TWT operation and may be a member of another r-TWT, or may be a STA that does not have a capability to support a r-TWT operation.

A STA (e.g., a low latency STA) that supports a restricted SP (or r-TWT SP) operation of a broadcast TWT may inform an AP that latency sensitive data must be transmitted based on a r-TWT operation. If an AP supports a r-TWT operation/mode, an AP may transmit a frame including scheduling information of TWTs requested by each STA to a low latency STA and other STA(s). For example, in order to perform an operation for a r-TWT, non-AP STAs may obtain r-TWT-related information from an AP through a beacon frame, a probe response frame, a (re)association response frame, or other format frames that are not defined yet (e.g., a frame for broadcast, advertisement and announcement).

According to a restricted TWT operation, a separate TXOP (i.e., access by other STAs is restricted) may be secured within a r-TWT SP by using a NAV such as (MU) RTS/CTS or CTS-to-self, or a quiet interval, etc. Before a specific r-TWT SP starts, if there is a TXOP of another STA (i.e., a non-member STA) other than a STA having a membership for the specific r-TWT schedule, it must be stopped. And a TXOP of the another STA (i.e., a non-member STA) may be additionally performed after the specific r-TWT SP ends.

### OBSS R-TWT related announcement and protection

In a multi-BSS environment, when APs are located within a range where they may receive each other's beacon frames, an overlapping BSS (OBSS) range may be formed, which is a range where the transmission and reception ranges (i.e., BSS) of the APs overlap.

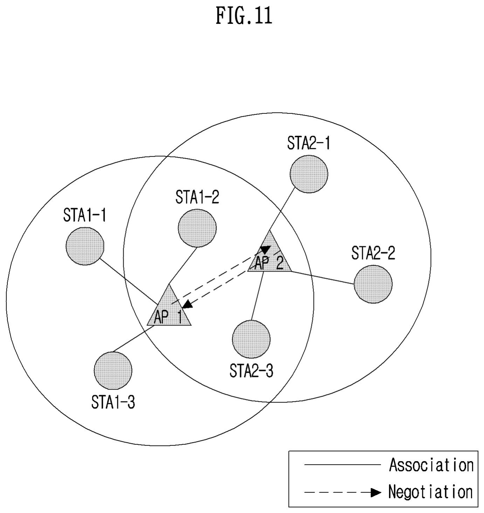

FIG. 11 is a diagram illustrating APs and STAs in an OBSS to which the present disclosure may be applied.

As illustrated in FIG. 11, a signaling-capable range of AP 1 (e.g., a range corresponding to BSS 1) and a signaling-capable range of AP 2 (e.g., a range corresponding to BSS 2) may overlap. In this manner, when AP 1 and AP 2 are located in ranges in which they can receive from each other (i.e., overhear each other), AP 1 and AP 2 may perform negotiation for coordination for an R-TWT service period (SP) scheduled by each of them through (wireless/wired) communication. This case corresponds to a case in which AP 1 and AP 2 are located in an OBSS having overlapping transmission/reception ranges with each other, unlike a case in which AP 1 and AP 2 are hidden nodes with respect to each other.

In this regard, an STA located in the overlapping range may receive not only a beacon frame from an AP with which the STA is associated, but also a beacon frame from an AP with which the STA is not associated. For example, STA 1-2 may receive a beacon frame from AP 1 with which it is associated, and may also receive (i.e., overhear) a beacon frame from AP 2 with which it is not associated. For example, STA 2-3 may receive a beacon frame from AP 2 with which it is associated, and may also receive (i.e., overhear) a beacon frame from AP 1 with which it is not associated.

At this time, AP 1 and AP 2 may correspond to slave APs (or shared APs) belonging to a MAP having the same master AP (or sharing AP). In addition, one of AP 1 or AP 2 may be a master AP (or sharing AP). In addition, AP 1 and AP 2 belong to the same MAP.

A beacon frame may include restricted-TWT (R-TWT) scheduling information that an AP allocates to STAs with which it is associated, and STAs receiving R-TWT scheduling information are required to protect an R-TWT SP where they are not a member (e.g., as described above, terminate the TXOP of an STA when a corresponding TXOP is in progress before the start time of an R-TWT SP). In other words, it may mean that an STA receiving a beacon frame including R-TWT scheduling information exists at a location to protect a corresponding R-TWT SP. Meanwhile, when an STA receives R-TWT scheduling information advertised by an unassociated (or neighboring) AP, whether a corresponding R-TWT SP must be protected or whether low latency traffic/data is transmitted or received during a corresponding R-TWT SP is not yet defined.

The present disclosure describes a method in which an associated AP (e.g., AP 1) announces associated STAs of R-TWT scheduling information of an AP with which the STAs are not associated (or a neighboring AP) (e.g., AP 2), and a protection method based thereon. In the following description, in order to distinguish from an R-TWT SP scheduled by the associated AP, an R-TWT SP scheduled by another AP (e.g., a non-associated AP or a neighboring AP) is referred to as an OBSS R-TWT SP. The scope of the present disclosure is not limited by the designation OBSS R-TWT.

### Embodiment 1

The present embodiment relates to a method for distinguishing between coordinated R-TWT and non-coordinated R-TWT.

First, coordinated R-TWT and non-coordinated R-TWT may be distinguished based on a result of (wireless/wired-based) negotiation for coordination for an R-TWT SP between an associated AP and a non-associated (or neighboring) AP.

A negotiation process for coordination between an associated AP (e.g., AP 1) and a non-associated (or neighboring) AP (e.g., AP 2) may be performed in a two-way (2-way) manner.
- Step 1. The associated AP may transmit a coordination request to the non-associated (or neighboring) AP.
- Step 2. The non-associated (or neighboring) AP that has received the coordination request may transmit a coordination response to the AP that transmitted the coordination request, that is, the associated AP.

In the above-described negotiation process, when the coordination response of step 2 includes information indicating "Accept" (or "Success"), the coordination may be interpreted as being successfully established. In this case, the R-TWT SP that is a subject of the negotiation may be regarded as a coordinated R-TWT SP among the APs participating in the negotiation.

In contrast, when the coordination response of step 2 includes information indicating "Reject" (or "Failure"), the associated AP may retransmit a coordination request to the non-associated (or neighboring) AP. At this time, the retransmitted coordination request may include the same R-TWT SP-related information as that included in a previously transmitted coordination request (e.g., the coordination request transmitted in step 1), or may include information in which part or all thereof is changed. When the last coordination response received from the non-associated (or neighboring) AP in the negotiation process includes information indicating "Reject" (or "Failure"), the coordination may be interpreted as being rejected (or failed). In this case, the R-TWT SP that is a subject of the negotiation may be regarded as a non-coordinated R-TWT SP among the APs participating in the negotiation. In this regard, the non-coordinated R-TWT SP may collectively refer to an R-TWT SP for which coordination has failed through a negotiation process among APs and an R-TWT SP that is not a subject of (that is, not included in) a negotiation process for coordination.

Next, in addition to the above-described negotiation process, coordinated R-TWT and non-coordinated R-TWT may be distinguished based on one or more of the following additional methods.

For example, when a third management entity (e.g., a central entity) exists, the third management entity may manage/allocate scheduling of APs and may share scheduling information of the APs with the APs. As an example, a master AP may serve as the third management entity. In this case, when the third management entity allocates an R-TWT SP to each AP and shares the corresponding R-TWT-related scheduling information with other APs, the corresponding R-TWT SP may be regarded as a coordinated R-TWT SP among the APs.

As another example, when an associated AP receives (i.e., overhears) a beacon frame transmitted by a non-associated (or neighboring) AP and obtains information on an OBSS R-TWT SP, the corresponding OBSS R-TWT SP may be regarded as a non-coordinated R-TWT SP. In this regard, the associated AP may schedule an R-TWT SP based on the OBSS R-TWT SP obtained through the beacon frame received (i.e., overheard) by the associated AP. As an example, the associated AP may allocate R-TWT SPs to STAs associated therewith so as not to overlap with the corresponding OBSS R-TWT SP and announce the same.

As still another example, information on an OBSS R-TWT SP may be obtained when an STA receives (i.e., overhears) a beacon frame transmitted by a non-associated (or neighboring) AP.

In this case, the STA may announce information on the corresponding OBSS R-TWT SP to the associated AP. At this time, the corresponding OBSS R-TWT SP may be regarded as a non-coordinated R-TWT SP. In this regard, the associated AP may schedule/allocate an R-TWT SP based on the OBSS R-TWT SP shared/announced by the STA. As an example, the associated AP may allocate R-TWT SPs to STAs associated therewith so as not to overlap with the corresponding OBSS R-TWT SP and announce the same.

Additionally or alternatively, in this case, based on the obtained information on the OBSS R-TWT SP, the STA may transmit, to the associated AP, a TWT request including information for a time (e.g., an SP) that does not overlap with the corresponding OBSS R-TWT SP. This scheme has an effect of reducing overhead that may occur by transmitting information on (a large number of) OBSS R-TWT SPs to the associated AP. This scheme may be efficient in a case where direct data transmission/reception between APs is not possible, a case where direct data transmission/reception between APs is possible but coordination cannot be performed, or a case where direct coordination between APs cannot be performed.

With respect to the scheme based on the above-described TWT request, the STA may transmit, (through a TWT setup frame,) a TWT request including a new field indicating a non-overlapping time (e.g., an SP) based on information for an OBSS R-TWT SP. The field may be indicated by using a reserved bit within a TWT element.

As an example, by using a reserved bit in a control field included in the TWT element, a new field having a length of 1 bit (e.g., an OBSS non-overlapping SP field) may be defined. Depending on a value of the field, it may be indicated whether request times (e.g., SPs) included in the TWT request (all) overlap with an OBSS R-TWT SP.

As another example, a new field (e.g., an overlapping R-TWT SP field) may be additionally configured in an information structure of coordinated R-TWT illustrated in FIG. 15 to be described later. As a specific example, the new field may be included as a new field in a broadcast TWT parameter set field within a TWT element, or may be included in a new element following the TWT element within a TWT setup frame. In this case, by indicating that an R-TWT SP corresponding to a broadcast TWT ID included in the information structure is a non-coordinated R-TWT SP and a non-overlapping R-TWT SP, information for times (e.g., SPs) that do not overlap with the corresponding OBSS R-TWT SP may be included/indicated.

In this regard, the associated AP may recognize, through values of the above-described new fields (e.g., an OBSS non-overlapping R-TWT SP field and an overlapping R-TWT SP field), that request times (e.g., SPs) are times that do not overlap with an OBSS R-TWT SP. Based thereon, the associated AP may allocate and announce an (R-)TWT SP to the corresponding STA based on information on the request times (e.g., SPs) included in a TWT request of the STA associated therewith. Through this, other STAs may also be caused to participate in the corresponding R-TWT as members.

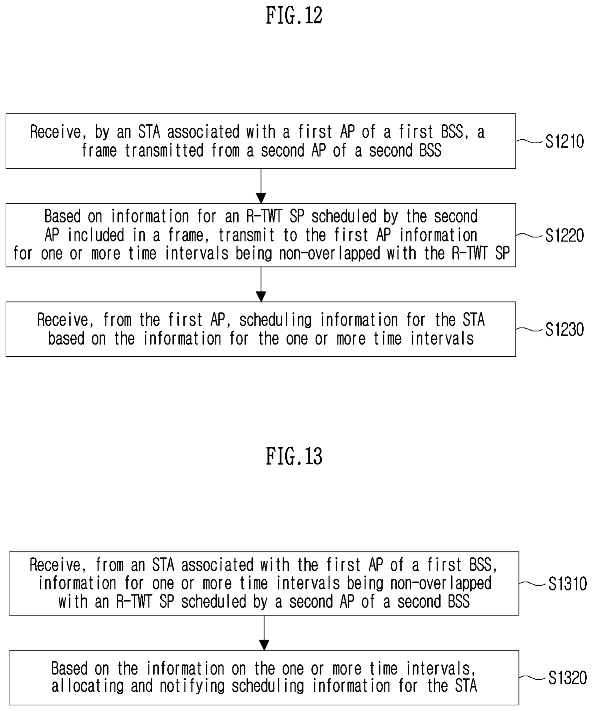

Hereinafter, STA operations and AP operations considering the above-described method will be described with reference to FIGS. 12 and 13. In FIGS. 12 and 13, a description is provided on an assumption that a first AP corresponds to an AP with which an STA is associated, and a second AP corresponds to an AP with which the STA is not associated (or a neighboring AP).

FIG. 12 illustrates an example of STA operation according to the present disclosure.

An STA associated with a first AP of a first BSS may receive (i.e., overhear) a frame transmitted from a second AP of a second BSS (S1210).

In this regard, it may be assumed that the STA is located in an OBSS region in which the first BSS and the second BSS overlap.

At this time, when the frame includes information for an R-TWT SP scheduled by the second AP, the STA may determine/identify one or more time intervals that do not overlap with the corresponding R-TWT SP. Based thereon, the STA may transmit information for the one or more time intervals (e.g., SPs) to the first AP with which the STA is associated (S1220).

Thereafter, the STA may receive (or be announced) scheduling information based on the information for the one or more time intervals from the first AP (S1230). As an example, the scheduling information may include information for a TWT SP allocated to and announced to the STA or information for an R-TWT SP.

In this regard, the information for the one or more time intervals described above may be transmitted by being included in a TWT element within a TWT setup frame for a TWT request. At this time, information related to whether there is overlap with an R-TWT SP may be included in a control field included in the TWT element within the corresponding TWT setup frame.

Alternatively, information related to whether there is overlap with an R-TWT SP may be included in a broadcast TWT parameter set field included in the TWT element within the corresponding TWT setup frame. In this case, the information related to whether there is overlap with an R-TWT SP may be configured, within the broadcast TWT parameter set field, together with at least one of a first field indicating whether there is coordination between APs for the R-TWT SP, a second field indicating a BSS color value of an AP that schedules the R-TWT SP, a third field indicating whether a protection operation for the R-TWT SP is performed, or a fourth field indicating a broadcast TWT ID corresponding to the R-TWT SP (e.g., see the information structure of FIG. 15).

Alternatively, information related to whether there is overlap with an R-TWT SP may be included in an element following the TWT element within the TWT setup frame.

Additionally, an R-TWT SP scheduled by the second AP that is received/overheard by the STA may be regarded as an R-TWT SP that is not coordinated between the first AP and the second AP.

The method described in the example of FIG. 12 may be performed by the first device (100) of FIG. 1. For example, one or more processors (102) of the first device (100) of FIG. 1 may be configured to receive a frame transmitted from a second AP of a second BSS, transmit, through one or more transceivers, information for one or more time intervals that do not overlap with the R-TWT SP to a first AP, and receive, through one or more transceivers, scheduling information for the first device based on the information for the one or more time intervals from the first AP. Furthermore, one or more memories (104) of the first device (100) may store instructions for performing the method described in the example of FIG. 12 or examples to be described later when executed by the one or more processors (102).

FIG. 13 illustrates another example of first AP operation according to the present disclosure.

A first AP of a first BSS may receive, from an STA associated therewith, information for one or more time intervals that do not overlap with an R-TWT SP scheduled by a second AP of a second BSS (S1310).

In this regard, it may be assumed that the STA is located in an OBSS area in which the first BSS and the second BSS overlap.

Thereafter, the first AP may allocate and announce scheduling information for the corresponding STA based on the information for the one or more time intervals (S1320). As an example, the scheduling information may include information for a TWT SP allocated to and announced to the STA or information for an R-TWT SP.

In the example of FIG. 13, detailed descriptions of information for one or more time intervals that do not overlap with an R-TWT SP scheduled by the second AP, scheduling information for a corresponding SRQ based thereon, and the like are the same as those in the example of FIG. 12, and thus, redundant descriptions are omitted.

The method described in the example of FIG. 13 may be performed by the second device (200) of FIG. 1. For example, one or more processors (202) of the second device (200) of FIG. 1 may be configured to receive, through one or more transceivers, from a first device associated with the second device, information for one or more time intervals that do not overlap with an R-TWT SP scheduled by a second AP of a second BSS, and to allocate scheduling information for the STA based on the information for the one or more time intervals and announce the same to the first device through the one or more transceivers. Furthermore, one or more memories (204) of the second device (200) may store instructions for performing the method described in the example of FIG. 13 or examples to be described later when executed by the one or more processors (202).

The examples of FIGS. 12 and 13 may correspond to some of various examples of the present disclosure.

### Embodiment 2

The present embodiment relates to a method in which an associated AP announces, to STAs associated therewith, information for a coordinated R-TWT SP for coordinated R-TWT distinguished through the above-described scheme(s), and a protection method therefor.

In this regard, a form of a coordinated R-TWT SP may be classified into an overlapped coordinated R-TWT SP in which an R-TWT SP and an OBSS R-TWT SP overlap, and a non-overlapped coordinated R-TWT SP in which an R-TWT SP and an OBSS R-TWT SP do not overlap. In the case of a non-overlapped coordinated R-TWT SP, the R-TWT SP and the OBSS R-TWT SP may be positioned before/after each other without overlapping in a time domain.

Hereinafter, a method in which an associated AP announces each of coordinated R-TWT SPs (e.g., an R-TWT SP and an OBSS R-TWT SP) and a method in which associated STA(s) protect the same are proposed.

### Embodiment 2-1

First, with respect to an overlapped coordinated R-TWT SP case, a method by which an AP announces coordinated R-TWT SP(s) and a protection method by an STA based thereon will be described.

In the case of an overlapped coordinated R-TWT SP, since R-TWT SPs are scheduled by APs to overlap (e.g., an overlapped coordinated R-TWT SP and a coordinated OBSS R-TWT SP), the corresponding R-TWT SPs may have the same or similar values of a TWT parameter set. As an example, values of a TWT field in a broadcast TWT element may be the same, but values of a TWT interval or a duration of a TWT SP may be the same or different.

During an overlapped coordinated R-TWT SP, APs may perform data transmission/reception by utilizing/operating an AP coordination scheme (e.g., C-TDMA, C-OFDMA, C-SR, etc.). For example, with respect to an AP coordination scheme operated during the corresponding SP, an associated AP and a non-associated (or neighboring) AP having an overlapped coordinated R-TWT SP may share, in advance, information indicating the same AP coordination scheme and information for operating the corresponding AP coordination scheme, in a negotiation process for coordinating the corresponding R-TWT SP. Based on such information, the associated AP and the non-associated (or neighboring) AP may operate the same AP coordination scheme during the corresponding SP to transmit/receive low-latency traffic.

When the associated AP announces information for an overlapped coordinated R-TWT SP to STAs associated therewith, the AP may announce only information corresponding to the overlapped coordinated R-TWT SP scheduled by the AP itself. That is, when the associated AP performs an announcement to STAs associated therewith, the AP may announce information related to the overlapped coordinated R-TWT SP as an SP of a BSS to which the AP belongs.

Based on the above-described announcement, an STA that has received the announcement may perform the following R-TWT protection operation.

FIG. 14 illustrates an example of STA operation for an overlapping coordinated R-TWT SP according to the present disclosure.

As illustrated in FIG. 14, an STA terminates its TXOP before a start time of an upcoming R-TWT SP in time based on R-TWT scheduling information transmitted by an AP with which the STA is associated.

For example, when an overlapped coordinated R-TWT SP is scheduled by AP 1 and AP 2, an STA associated with AP 1 and an STA associated with AP 2 shall operate to terminate their respective TXOPs before the corresponding overlapped coordinated R-TWT SP.

In this regard, it is assumed that the STA associated with AP 1 and the STA associated with AP 2 are not members of the corresponding overlapped coordinated R-TWT, or are STAs that do not support R-TWT (e.g., an STA that does not support an R-TWT operation itself as a type supporting a wireless LAN technology in which an R-TWT capability itself is not defined, an STA that supports a wireless LAN technology in which an R-TWT capability is defined but does not have an R-TWT capability for the corresponding overlapped coordinated R-TWT, etc.). However, the scope of the present disclosure is not limited thereto. As an example, an exception rule or the like may be applied to a specific STA.

### Embodiment 2-2

Next, with respect to a non-overlapped coordinated R-TWT SP case, a method for announcing coordinated R-TWT SP(s) and a protection method based thereon will be described.

A non-overlapped coordinated R-TWT SP corresponds to an R-TWT SP scheduled such that R-TWT SPs do not overlap with each other in a time domain among APs. For example, when there exist a coordinated R-TWT SP scheduled by an associated AP and a coordinated OBSS R-TWT SP scheduled by a non-associated (or neighboring) AP, and no overlap occurs therebetween, each R-TWT SP corresponds to a non-overlapped coordinated R-TWT SP. In this case, unlike the overlapped coordinated R-TWT SP case, each R-TWT SP may have a different TWT parameter set.

During a non-overlapped coordinated R-TWT SP, APs may perform data transmission/reception without utilizing an AP coordination scheme (e.g., C-TDMA, C-OFDMA, C-SR, etc.). However, if information indicating the same AP coordination scheme and information for operating the corresponding AP coordination scheme are shared among APs in advance in a negotiation process for coordinating the corresponding R-TWT SP, APs (e.g., an associated AP and a non-associated (or neighboring) AP) may transmit/receive low-latency traffic during the corresponding R-TWT SP by utilizing the same AP coordination scheme based on such information.

When the associated AP announces information for a non-overlapped coordinated R-TWT SP to STAs associated therewith, the AP may announce not only information for the non-overlapped coordinated R-TWT SP scheduled by the AP itself, but also information for a non-overlapped coordinated OBSS R-TWT SP scheduled by a non-associated (or neighboring) AP.

In this regard, scheduling information for the non-overlapped coordinated R-TWT SP of the non-associated (or neighboring) AP, that is, the non-overlapped coordinated OBSS R-TWT SP, may be included as at least one piece of information within a TWT element. That is, the non-overlapped coordinated R-TWT SP and the non-overlapped coordinated OBSS R-TWT SP may each be included in the TWT element as separate broadcast TWT parameter sets.

In addition, in this regard, coordinated R-TWT information such as that illustrated in FIG. 15 may be additionally defined/configured/transmitted.

FIG. 15 illustrates an example of the configuration of coordinated R-TWT information according to the present disclosure.

Referring to FIG. 15, coordinated R-TWT information may be configured to include a coordinated R-TWT field, a BSS color field, a protection recommendation field, and a broadcast TWT ID field. Additionally, as described above, the coordinated R-TWT information may further include an overlapped coordinated R-TWT SP field related to whether there is overlap with another coordinated R-TWT SP.

Fields included in the coordinated R-TWT information may be defined as new fields by extending a broadcast TWT parameter set field within a TWT element, or fields of a new element may be defined. As an example, the new element may be included/positioned following the TWT element within a TWT setup frame.

The coordinated R-TWT field may indicate whether an R-TWT SP corresponds to an R-TWT SP for which negotiation for coordination has been successfully performed with an AP that performs the announcement (i.e., the associated AP). For example, the field may have a length of 1 bit, and in this case, a value of 1 may be defined to indicate a coordinated R-TWT SP, and a value of 0 may be defined to indicate a non-coordinated R-TWT SP. Additionally, in the present disclosure considering a case in which a third entity managing APs exists, the field may also be extended and used for distinguishing between the coordinated R-TWT SP and the non-coordinated R-TWT SP described above.

The BSS color field may indicate a BSS color of an AP that schedules the corresponding R-TWT SP. As an example, the field may have a length of 6 bits and may be set to indicate a BSS color value.

The protection recommendation field may indicate whether associated STA(s) should perform a protection operation for the corresponding R-TWT SP. The protection recommendation field may have an indication value indicating whether an STA should follow a protection rule for the corresponding R-TWT SP in a mandatory manner or a conditional mandatory manner (or an optional manner).

For example, when the corresponding value is 0, an STA will/shall stop its TXOP before a start time of the corresponding R-TWT SP. In contrast, when the corresponding value is 1 or a value greater than 1, this may indicate that the STA shall conditionally follow a protection rule for the corresponding R-TWT SP based on other information. The other information described above may be information of another layer (e.g., a PHY layer) for the corresponding STA.

As a specific example, the information may include a BSS color value of a U-SIG field for determining that a PPDU is from an AP other than an associated AP (i.e., a non-associated, neighboring, or OBSS AP), a threshold level value including a received signal strength of data received from a non-associated (or neighboring) AP, a value related to spatial reuse, and the like. As an example, the threshold level value may be a PD level of -82 dBm, an ED level of -62 dBm, or a threshold level value within a specific range defined in a system, and may be announced through a beacon or the like. Also, as an example, the value related to spatial reuse may be a value of a UL spatial reuse subfield indicated in a common info field of a trigger frame.

The broadcast TWT ID may refer to a broadcast TWT ID within a TWT element corresponding to the corresponding R-TWT SP. Through the value, an STA may identify scheduling information for the corresponding R-TWT (i.e., the corresponding coordinated R-TWT).

Based on the above-described announcement, an STA that has received the announcement may perform the following R-TWT protection operation.

Specifically, based on information transmitted/announced by the associated AP, the STA may perform an R-TWT SP protection operation for a non-overlapped coordinated R-TWT SP scheduled by the associated AP, and may also perform an R-TWT SP protection operation for a non-overlapped coordinated R-TWT SP scheduled by a non-associated (or neighboring) AP (i.e., a non-overlapped coordinated OBSS R-TWT SP).

For example, the STA terminates its TXOP before a start time of a non-overlapped coordinated R-TWT SP scheduled (or allocated) by the associated AP. In addition, based on a value of a protection recommendation field delivered by the associated AP, the STA may terminate its TXOP before a start time of a non-overlapped coordinated R-TWT SP scheduled (or allocated) by a non-associated (or neighboring) AP (i.e., a non-overlapped coordinated OBSS R-TWT SP), or may not terminate the TXOP.

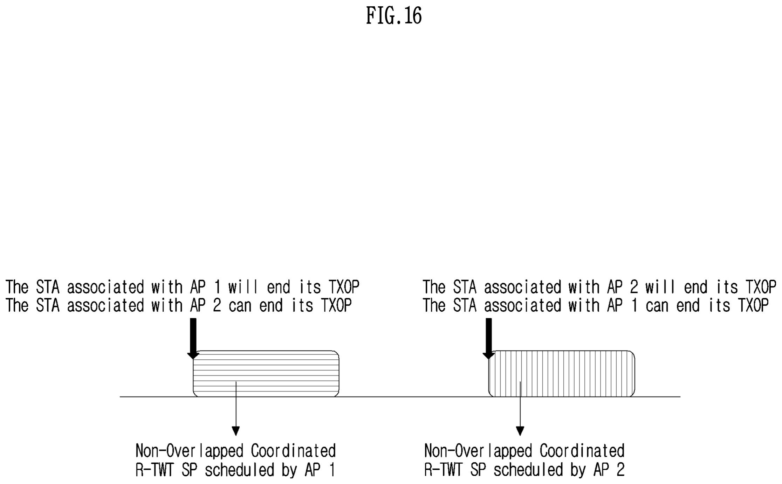

FIG. 16 illustrates an example of STA operation for a non-overlapping coordinated R-TWT SP according to the present disclosure.

In FIG. 16, as described above, a case is assumed and described in which an STA receives, from an AP with which the STA is associated, information for a non-overlapped coordinated R-TWT SP scheduled by AP 1 and information for a non-overlapped coordinated R-TWT SP scheduled by AP 2.

For example, an STA associated with AP 1 follows a protection rule for a non-overlapped coordinated R-TWT SP scheduled by AP 1. That is, the STA terminates its TXOP before a start time of the non-overlapped coordinated R-TWT SP scheduled by AP 1. However, with respect to a non-overlapped coordinated R-TWT SP scheduled by AP 2, the STA may terminate its TXOP or may not terminate its TXOP based on a value of a protection recommendation field indicated by AP 1.

Similarly, an STA associated with AP 2 follows a protection rule for a non-overlapped coordinated R-TWT SP scheduled by AP 2. That is, the STA terminates its TXOP before a start time of the non-overlapped coordinated R-TWT SP scheduled by AP 2. However, with respect to a non-overlapped coordinated R-TWT SP scheduled by AP 1, the STA may terminate its TXOP or may not terminate its TXOP based on a value of a protection recommendation field indicated by AP 2.

In this regard, it is assumed that an STA associated with AP 1 and an STA associated with AP 2 are not members of the corresponding overlapped coordinated R-TWT, or are STAs that do not support R-TWT (e.g., an STA that does not support an R-TWT operation itself as a type supporting a wireless LAN technology in which an R-TWT capability itself is not defined, an STA that supports a wireless LAN technology in which an R-TWT capability is defined but does not have an R-TWT capability for the corresponding overlapped coordinated R-TWT, etc.). However, the scope of the present disclosure is not limited thereto. As an example, an exception rule or the like may be applied to a specific STA. In addition, it is assumed that an STA associated with AP 1 and an STA associated with AP 2 are STAs that support enhanced R-TWT (or OBSS R-TWT) defined in a new wireless LAN technology (e.g., next-EHT or UHR technology) (e.g., a next-EHT or UHR STA), but the present disclosure is not limited thereto. As an example, an exception rule or the like may be applied to a specific STA.

Additionally, when an AP announces information on a non-overlapped coordinated R-TWT SP to associated STAs, a case may occur in which the AP does not include separate information on a non-overlapped coordinated OBSS R-TWT SP, or even when such separate information is included, the STA is unable to interpret (or decode) the corresponding information.

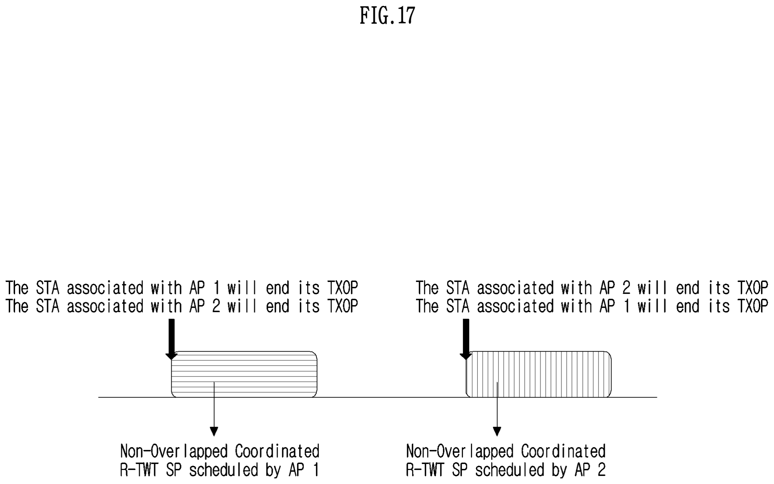

FIG. 17 describes STA operations in the above-described case. For clarity of description, an R-TWT including configurations (features) related to R-TWT defined in a new wireless LAN technology (e.g., next-EHT or UHR technology) is referred to as enhanced R-TWT (or OBSS R-TWT).

FIG. 17 illustrates another example of STA operation for a non-overlapping coordinated R-TWT SP according to the present disclosure.

Referring to FIG. 17, it is assumed that an STA associated with AP 1 and an STA associated with AP 2 do not support enhanced R-TWT (or OBSS R-TWT) and support only R-TWT defined in an existing wireless LAN technology (e.g., EHT technology), but the present disclosure is not limited thereto. For example, the STAs may be STAs of an EHT STA type having an R-TWT capability, or STAs of a UHR STA type having only an R-TWT capability without having an enhanced R-TWT (or OBSS R-TWT) capability.

In this regard, the STAs cannot recognize separate information for a non-overlapped coordinated OBSS R-TWT announced/delivered by an associated AP. Accordingly, an STA associated with AP 1 terminates its TXOP before a start time of a non-overlapped coordinated R-TWT SP scheduled by AP 1 and a start time of a non-overlapped coordinated R-TWT SP scheduled by AP 2. In addition, an STA associated with AP 2 terminates its TXOP before a start time of a non-overlapped coordinated R-TWT SP scheduled by AP 1 and a start time of a non-overlapped coordinated R-TWT SP scheduled by AP 2.

In this regard, it is assumed that an STA associated with AP 1 and an STA associated with AP 2 are not members of the corresponding overlapped coordinated R-TWT, or are STAs that do not support R-TWT (e.g., an STA that does not support an R-TWT operation itself as a type supporting a wireless LAN technology in which an R-TWT capability itself is not defined, an STA that supports a wireless LAN technology in which an R-TWT capability is defined but does not have an R-TWT capability for the corresponding overlapped coordinated R-TWT, etc.).

Additionally, when an AP announces information for a non-coordinated R-TWT SP to associated STAs based on the schemes for announcing information for a coordinated R-TWT SP described above in the present disclosure, the associated STAs may perform a protection operation for the corresponding non-coordinated R-TWT SP.

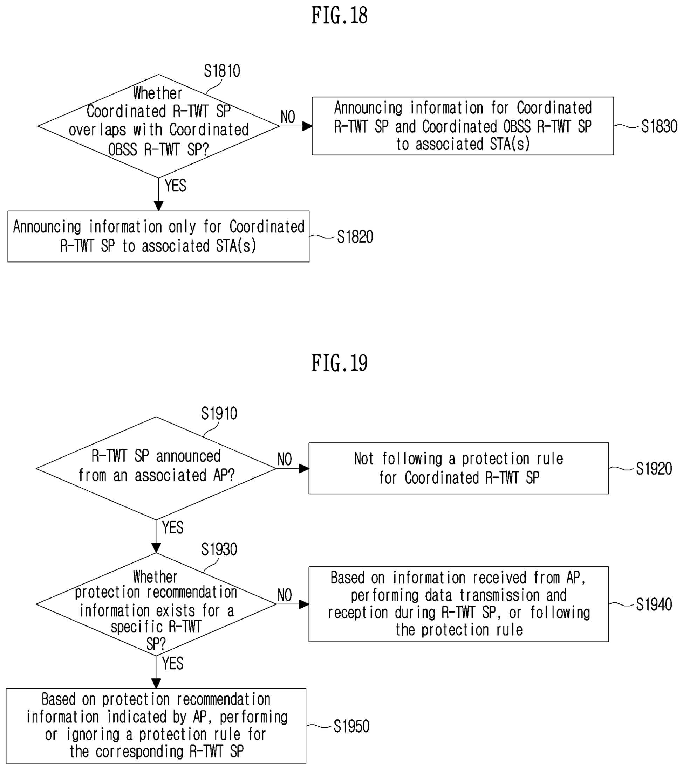

FIG. 18 illustrates the operation of an AP that performs an announcement for a coordinated R-TWT SP and/or a coordinated OBSS R-TWT SP according to the present disclosure.

In the present disclosure, a method has been described in which an AP announces, to STA(s) associated therewith, information for coordinated R-TWT and OBSS R-TWT with a non-associated (or neighboring) AP.

Referring to FIG. 18, the AP may identify/determine whether a coordinated R-TWT SP overlaps with a coordinated OBSS R-TWT SP (S1810). For example, the AP may identify/determine whether the coordinated OBSS R-TWT SP is configured with the same or similar TWT parameters (i.e., a TWT parameter set) as the coordinated R-TWT SP.

If the coordinated R-TWT SP and the coordinated OBSS R-TWT SP overlap, the AP may announce, to the associated STA(s), only information corresponding to the coordinated R-TWT SP, excluding the coordinated OBSS R-TWT SP (S1820).

In contrast, when the coordinated R-TWT SP and the coordinated OBSS R-TWT SP do not overlap, the AP may announce, to the associated STA(s), information corresponding to the coordinated R-TWT SP and the coordinated OBSS R-TWT SP and additional information related to the coordinated OBSS R-TWT SP (S1830).

In this regard, information announced/shared by the AP to the associated STA(s), that is, information for an overlapped coordinated R-TWT SP, an overlapped coordinated OBSS R-TWT SP, and/or a non-coordinated (OBSS) R-TWT SP, may be based on the above-described description of the present disclosure.

Although FIG. 18 has been described with reference to a coordinated R-TWT SP, since the AP may also announce information for a non-coordinated R-TWT SP with a non-associated (or neighboring) AP to associated STA(s), the operations described in FIG. 18 may be extended and applied thereto as well.

FIG. 19 illustrates the operation of an STA for an announced R-TWT SP according to the present disclosure.

Referring to FIG. 19, an STA may receive, from an associated AP, an announcement including information for an R-TWT SP scheduled by the associated AP and/or an R-TWT SP scheduled by a non-associated (or neighboring) AP (i.e., an OBSS R-TWT SP).

In this regard, the STA may determine whether an R-TWT SP that is a subject to which a protection rule is to be applied corresponds to an R-TWT SP announced by the associated AP (S1910).

For example, a case in which the R-TWT SP is not an R-TWT SP announced by the associated AP corresponds to a case in which the R-TWT SP is an OBSS R-TWT SP obtained by the STA by receiving (i.e., overhearing) a beacon frame or the like transmitted by a non-associated (or neighboring) AP. In this case, the STA may not follow a protection rule for the corresponding R-TWT SP (i.e., the corresponding OBSS R-TWT SP) (S1920). That is, the STA may not terminate its TXOP before a start time of the corresponding R-TWT SP.

In contrast, when the R-TWT SP (or OBSS R-TWT SP) is an R-TWT SP announced by the associated AP, the STA may be configured/defined to follow a protection rule for the corresponding SP. At this time, the STA may determine whether there is information for a protection recommendation related to application of the protection rule for a specific R-TWT SP (S1930). Here, the information for the protection recommendation may be indicated by the associated AP.

If information for a protection recommendation is not indicated for the corresponding R-TWT SP, the STA may transmit/receive data during the R-TWT SP based on information received from the associated AP, or may perform an operation according to a protection rule (S1940). In contrast, if information on a protection recommendation is indicated for the corresponding R-TWT SP, the STA may perform or may ignore an operation according to a protection rule for the corresponding R-TWT SP based on the information for the protection recommendation (S1950).

The STA operation in FIG. 19 may be an STA operation applicable to a coordinated (OBSS) R-TWT SP, a non-coordinated (OBSS) R-TWT SP, an overlapped (OBSS) R-TWT SP, a non-overlapped (OBSS) R-TWT SP, and/or a combined (OBSS) R-TWT SP thereof described above in the present disclosure.

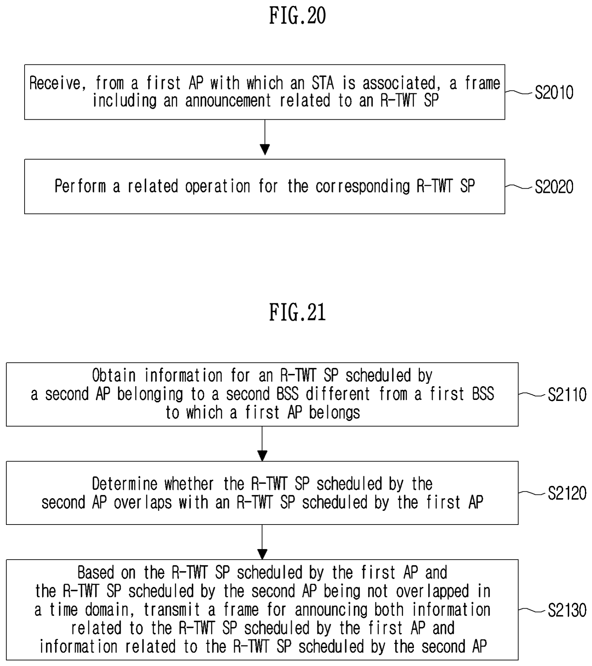

Hereinafter, STA operations and AP operations considering the above-described method will be described with reference to FIGS. 20 and 21. In FIGS. 20 and 21, a description is provided on an assumption that a first AP corresponds to an AP with which an STA is associated, and a second AP corresponds to an AP with which the STA is not associated (or a neighboring AP). In this regard, it is assumed that the first AP and the second AP belong to different BSSs.

FIG. 20 illustrates another example of an STA operation according to the present disclosure.

The STA may receive, from an associated first AP, a frame including an announcement related to an R-TWT SP (S2010).

Thereafter, the STA may perform a related operation (e.g., an operation according to a protection rule, an operation of ignoring a protection rule, a data transmission/reception operation, etc.) for the corresponding R-TWT SP based on information included in the announcement (S2020).

In this regard, when a first R-TWT SP scheduled by the first AP and a second R-TWT SP scheduled by a second AP with which the STA is not associated do not overlap in a time domain, the announcement may include both information related to the first R-TWT SP and information related to the second R-TWT SP. In contrast, when the first R-TWT SP scheduled by the first AP and the second R-TWT SP scheduled by the second AP with which the STA is not associated overlap in the time domain, the announcement may include only information related to the first R-TWT SP.

At this time, when information for the second R-TWT SP is announced to the STA, the announcement may include scheduling information for the second R-TWT SP and related additional information. At this time, the additional information may be included as a field in a broadcast parameter set field within a TWT element for the second R-TWT SP in the frame, or may be included in an element following the TWT element for the second R-TWT SP.

For example, the additional information may include information indicating whether there is coordination between the first AP and the second AP for the second R-TWT SP. Here, whether there is coordination for the second R-TWT SP may be based on whether negotiation between the first AP and the second AP has been successfully completed, or whether the second R-TWT SP has been allocated by an entity managing the first AP and the second AP.

Additionally or alternatively, the additional information may include indication information (e.g., a protection recommendation field) indicating whether to follow a protection rule of terminating its transmission opportunity (TXOP) before a start time of the second R-TWT SP. Specifically, setting the indication information to a specific value (e.g., 0) may indicate mandatorily following the protection rule for the second R-TWT SP, and setting the indication information to a value other than the specific value may indicate conditionally following the protection rule for the second R-TWT SP. In this regard, when the indication information is set to a value other than the specific value, the STA may be configured to determine whether to follow the protection rule based on other information (e.g., PHY information). As a specific example, the other information may include one or more of a BSS color value in a U-SIG field, a threshold value for received signal strength of data received from the second AP, or a value related to spatial reuse.

Additionally or alternatively, the additional information may include information indicating a BSS color value of an AP that schedules the second R-TWT SP.

Additionally or alternatively, the additional information may include information indicating a broadcast TWT ID within a TWT element corresponding to the second R-TWT SP.

The method described in the example of FIG. 20 may be performed by the first device (100) of FIG. 1. For example, one or more processors (102) of the first device (100) of FIG. 1 may be configured to receive, through one or more transceivers, a frame including an announcement related to a restricted TWT (R-TWT) service period (SP) from an associated first AP, and to perform a related operation for the R-TWT SP. Furthermore, one or more memories (104) of the first device (100) may store instructions for performing the method described in the example of FIG. 20 or examples to be described later when executed by the one or more processors (102).

FIG. 21 illustrates another example of a first AP operation according to the present disclosure.

The first AP may obtain information for an R-TWT SP scheduled by a second AP belonging to a second BSS different from a first BSS to which the first AP belongs (S2110).

Thereafter, the first AP may determine whether an R-TWT SP scheduled by the first AP overlaps with an R-TWT SP scheduled by the second AP (S2120).

At this time, when the R-TWT SP scheduled by the first AP and the R-TWT SP scheduled by the second AP do not overlap in the time domain, the first AP may transmit a frame for announcing both information related to the R-TWT SP scheduled by the first AP and information related to the R-TWT SP scheduled by the second AP (S2130).

In the example of FIG. 21, detailed descriptions of information included in the frame and announced, that is, information related to the R-TWT SP scheduled by the first AP and information related to the R-TWT SP scheduled by the second AP, are the same as those in the example of FIG. 20, and thus, redundant descriptions are omitted.

The method described in the example of FIG. 21 may be performed by the second device (200) of FIG. 1. For example, one or more processors (202) of the second device (200) of FIG. 1 may be configured to obtain, through one or more transceivers, information for a restricted TWT (R-TWT) service period (SP) scheduled by a second AP belonging to a second BSS different from a first BSS to which a first AP belongs, to determine whether the R-TWT SP scheduled by the second AP overlaps with an R-TWT SP scheduled by the first AP, and to announce, through the one or more transceivers, information related to the R-TWT SP scheduled by the first AP and/or information related to the R-TWT SP scheduled by the second AP based on the overlap determination. Furthermore, one or more memories (204) of the second device (200) may store instructions for performing the method described in the example of FIG. 21 or examples to be described later when executed by the one or more processors (202).

The examples of FIGS. 20 and 21 may correspond to some of various examples of the present disclosure.

Unlike a scheme for protecting an R-TWT SP based on R-TWT-related scheduling information announced by an associated AP in a conventional wireless LAN system, an R-TWT SP protection scheme according to examples of the present disclosure can achieve a new effect of protecting not only an R-TWT SP scheduled by the associated AP but also an R-TWT SP scheduled by a non-associated (or neighboring) AP by considering R-TWT-related scheduling information of the non-associated (or neighboring) AP as well.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a station (STA) in a wireless LAN system, the method comprising:
receiving, by the STA associated with a first access point (AP) of a first basic service set (BSS), a frame transmitted from a second AP of a second BSS;
based on the frame including information for a restricted target wake time (R-TWT) service period (SP) scheduled by the second AP, transmitting, to the first AP, information for one or more time intervals being non-overlapped with the R-TWT SP; and
receiving, from the first AP, scheduling information for the STA based on the information for the one or more time intervals.

2. The method of claim 1, wherein:
the information for the one or more time intervals is included in a TWT element within a TWT setup frame for a TWT request.

3. The method of claim 2, wherein:
information related to whether there is overlap with the R-TWT SP is included in a control field included in the TWT element within the TWT setup frame.

4. The method of claim 2, wherein:
information related to whether there is overlap with the R-TWT SP is included in a broadcast TWT parameter set field included in the TWT element within the TWT setup frame.

5. The method of claim 4, wherein:
information related to whether there is overlap with the R-TWT SP is configured, within the broadcast TWT parameter set field, together with at least one of a first field indicating whether there is coordination between APs for the R-TWT SP, a second field indicating a BSS color value of an AP that schedules the R-TWT SP, a third field indicating whether a protection operation for the R-TWT SP is performed, or a fourth field indicating a broadcast TWT ID corresponding to the R-TWT SP.

6. The method of claim 2, wherein:
information related to whether there is overlap with the R-TWT SP is included in an element following the TWT element within the TWT setup frame.

7. The method of claim 1, wherein:
the scheduling information for the STA includes information for a TWT SP allocated to and announced for the STA or information for an R-TWT SP.

8. The method of claim 1, wherein:
the R-TWT SP is regarded as an R-TWT SP that is not coordinated between the first AP and the second AP.

9. A first station (STA) device in a wireless local area network (WLAN) system, the device comprising:
at least one transceiver; and
at least one processor connected to the at least one transceiver,
wherein the at least one processor is configured to:
receive, by the first STA associated with a first access point (AP) of a first basic service set (BSS), a frame transmitted from a second AP of a second BSS;
based on the frame including information for a restricted target wake time (R-TWT) service period (SP) scheduled by the second AP, transmit, to the first AP, information for one or more time intervals being non-overlapped with the R-TWT SP; and
receive, from the first AP, scheduling information for the STA based on the information for the one or more time intervals.

10. A method performed by a first access point (AP) in a wireless LAN system, the method comprising:
receiving, from an STA associated with the first AP of a first basic service set (BSS), information for one or more time intervals that do not overlap with a restricted target wake time (R-TWT) service period (SP) scheduled by a second AP of a second BSS; and
allocating and announcing scheduling information for the STA based on the information for the one or more time intervals.

11. A first access point (AP) device in a wireless local area network (WLAN) system, the device comprising:
at least one transceiver; and
at least one processor connected to the at least one transceiver,
wherein the at least one processor is configured to:
receive, from an STA associated with the first AP of a first basic service set (BSS), information for one or more time intervals that do not overlap with a restricted target wake time (R-TWT) service period (SP) scheduled by a second AP of a second BSS; and
allocate and announce scheduling information for the STA based on the information for the one or more time intervals.

12. A method performed by a station (STA) in a wireless LAN system, the method comprising:
receiving, from a first access point (AP) with which the STA is associated, a frame including an announcement related to a restricted target wake time (R-TWT) service period (SP); and
performing a related operation for the R-TWT SP,
wherein, based on a first R-TWT SP scheduled by the first AP and a second R-TWT SP scheduled by a second AP with which the STA is not associated not overlapping in a time domain, the announcement includes both information related to the first R-TWT SP and information related to the second R-TWT SP.

13. The method of claim 12, wherein:
based on the first R-TWT SP scheduled by the first AP and the second R-TWT SP scheduled by the second AP with which the STA is not associated overlapping in the time domain, the announcement includes information related to the first R-TWT SP.

14. The method of claim 12, wherein:
the announcement further includes scheduling information for the second R-TWT SP and additional information.

15. The method of claim 14, wherein:
the additional information includes information indicating whether there is coordination between the first AP and the second AP for the second R-TWT SP.

16. The method of claim 15, wherein:
whether there is coordination for the second R-TWT SP is based on whether negotiation between the first AP and the second AP has been successfully completed, or whether the second R-TWT SP has been allocated by an entity managing the first AP and the second AP.

17. The method of claim 14, wherein:
the additional information includes indication information indicating whether to follow a protection rule of terminating a transmission opportunity (TXOP) before a start time of the second R-TWT SP.

18. The method of claim 17, wherein:
setting the indication information to a specific value indicates mandatorily following the protection rule for the second R-TWT SP, and
setting the indication information to a value other than the specific value indicates conditionally following the protection rule for the second R-TWT SP.

19. The method of claim 18, wherein:
based on the indication information being set to a value other than the specific value, the STA is configured to determine whether to follow the protection rule based on other information, and
wherein the other information includes one or more of a BSS color value in a U-SIG field, a threshold value for received signal strength of data received from the second AP, or a value related to spatial reuse.

20. The method of claim 14, wherein:
the additional information includes information indicating a BSS color value of an AP that schedules the second R-TWT SP.

21. The method of claim 14, wherein:
the additional information includes information indicating a broadcast TWT ID within a TWT element corresponding to the second R-TWT SP.

22. The method of claim 14, wherein:
the additional information is included, in the frame,
as a field in a broadcast parameter set field within a TWT element for the second R-TWT SP, or
in an element following the TWT element for the second R-TWT SP.

23. A first station (STA) in a wireless local area network (WLAN) system, the first STA comprising:
at least one transceiver; and
at least one processor connected to the at least one transceiver,
wherein the at least one processor is configured to:
receive, from a first access point (AP) with which the STA is associated, a frame including an announcement related to a restricted target wake time (R-TWT) service period (SP); and
perform a related operation for the R-TWT SP,
wherein, based on a first R-TWT SP scheduled by the first AP and a second R-TWT SP scheduled by a second AP with which the STA is not associated not overlapping in a time domain, the announcement includes both information related to the first R-TWT SP and information related to the second R-TWT SP.

24. A method performed by a first access point (AP) in a wireless LAN system, the method comprising:
obtaining information for a restricted target wake time (R-TWT) service period (SP) scheduled by a second AP belonging to a second basic service set (BSS) different from a first BSS to which the first AP belongs;
determining whether the R-TWT SP scheduled by the second AP overlaps with an R-TWT SP scheduled by the first AP; and
based on the R-TWT SP scheduled by the first AP and the R-TWT SP scheduled by the second AP not overlapping in a time domain, transmitting a frame for announcing both information related to the R-TWT SP scheduled by the first AP and information related to the R-TWT SP scheduled by the second AP.

25. A first access point (AP) in a wireless local area network (WLAN) system, the first AP comprising:
at least one transceiver; and
at least one processor connected to the at least one transceiver,
wherein the at least one processor is configured to:
obtain information for a restricted target wake time (R-TWT) service period (SP) scheduled by a second AP belonging to a second basic service set (BSS) different from a first BSS to which the first AP belongs;
determin whether the R-TWT SP scheduled by the second AP overlaps with an R-TWT SP scheduled by the first AP; and
based on the R-TWT SP scheduled by the first AP and the R-TWT SP scheduled by the second AP not overlapping in a time domain, transmit a frame for announcing both information related to the R-TWT SP scheduled by the first AP and information related to the R-TWT SP scheduled by the second AP.
